(19) Europäisches Patentamt / European Patent Office / Office européen des brevets

(11) **EP 4 746 405 A1**

(12) **EUROPEAN PATENT APPLICATION**
published in accordance with Art. 153(4) EPC

(43) Date of publication:
**20.05.2026 Bulletin 2026/21**

(21) Application number: **24838709.4**

(22) Date of filing: **05.07.2024**

(51) International Patent Classification (IPC):
***H04N 19/124*** (2014.01)

(52) Cooperative Patent Classification (CPC):
**G06T 9/00; H04N 19/124; H04N 19/136;
H04N 19/42; H04N 19/44; H04N 19/593;
H04N 19/60; H04N 19/91**

(86) International application number:
**PCT/CN2024/103835**

(87) International publication number:
**WO 2025/011456 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.07.2023 CN 202310853890**

(71) Applicant: **Vivo Mobile Communication Co., Ltd.
Dongguan, Guangdong 523863 (CN)**

(72) Inventors:
• **ZHANG, Wei**
  **Dongguan, Guangdong 523863 (CN)**
• **WANG, Di**
  **Dongguan, Guangdong 523863 (CN)**
• **YANG, Fuzheng**
  **Dongguan, Guangdong 523863 (CN)**
• **LV, Zhuoyi**
  **Dongguan, Guangdong 523863 (CN)**

(74) Representative: **Lavoix
Bayerstraße 83
80335 München (DE)**

(54) **ATTRIBUTE ENCODING METHOD, ATTRIBUTE DECODING METHOD, AND ELECTRONIC DEVICE**

(57) Embodiments of this application provide an attribute encoding method, an attribute decoding method, and an electronic device, pertaining to the field of encoding and decoding technologies. The attribute encoding method includes: determining, by an encoding end, K first target neighboring points in a plurality of candidate neighboring points based on a geometric distance and an attribute distance between a to-be-encoded point and each candidate neighboring point in the plurality of candidate neighboring points (S501); where the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1; performing, by the encoding end, attribute prediction on the to-be-encoded point based on an attribute value of each first target neighboring point to obtain an attribute predicted value of the to-be-encoded point (S502); and encoding, by the encoding end, an attribute residual of the to-be-encoded point to generate an encoded bitstream corresponding to the to-be-encoded point (S503); where the attribute residual of the to-be-encoded point is determined based on the attribute predicted value of the to-be-encoded point and an original attribute value of the to-be-encoded point.

An encoding end determines K first target neighboring points in a plurality of candidate neighboring points based on a geometric distance and an attribute distance between a to-be-encoded point and each candidate neighboring point in the plurality of candidate neighboring points — S501

The encoding end performs attribute prediction on the to-be-encoded point based on an attribute value of each first target neighboring point to obtain an attribute predicted value of the to-be-encoded point — S502

The encoding end encodes an attribute residual of the to-be-encoded point to generate an encoded bitstream corresponding to the to-be-encoded point — S503

FIG. 5

## Description

### CROSS-REFERENCE TO RELATED APPLICATIONS

This application claims priority to Chinese Patent Application No. 202310853890.X filed in China on July 12, 2023, which is incorporated herein by reference in its entirety.

### TECHNICAL FIELD

This application pertains to the field of encoding and decoding technologies, and specifically relates to an attribute encoding method, an attribute decoding method, and an electronic device.

### BACKGROUND

A point cloud is a set of discrete points irregularly distributed in space, representing a spatial structure and surface attributes of a three-dimensional object or scene. In the encoding process of a point cloud, attribute information encoding is involved. Currently, nearest neighboring points corresponding to a to-be-encoded point are determined based on geometric information of already-encoded points, and then weighted prediction is performed on attribute values of the nearest neighboring points to obtain an attribute predicted value of the to-be-encoded point.

However, in a point cloud, there may be cases where a spatial distance between the to-be-encoded point and nearby prediction points is relatively small, but their attribute values differ significantly. If nearest neighboring points are determined based on the geometric information of the already-encoded points and attribute encoding is performed on the to-be-encoded point based on the attribute values of the nearest neighboring points, an encoded bitstream with information redundancy is likely to be obtained.

### SUMMARY

Embodiments of this application provide an attribute encoding method, an attribute decoding method, and an electronic device, which can resolve the technical problem of information redundancy in encoded bitstreams.

According to a first aspect, an attribute encoding method is provided, including:

determining, by an encoding end, K first target neighboring points in a plurality of candidate neighboring points based on a geometric distance and an attribute distance between a to-be-encoded point and each candidate neighboring point in the plurality of candidate neighboring points; where the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;

performing, by the encoding end, attribute prediction on the to-be-encoded point based on an attribute value of each first target neighboring point to obtain an attribute predicted value of the to-be-encoded point; and

encoding, by the encoding end, an attribute residual of the to-be-encoded point to generate an encoded bitstream corresponding to the to-be-encoded point; where the attribute residual of the to-be-encoded point is determined based on the attribute predicted value of the to-be-encoded point and an original attribute value of the to-be-encoded point.

According to a second aspect, an attribute decoding method is provided, including:

parsing, by a decoding end, an obtained encoded bitstream to obtain a to-be-decoded point and a plurality of already-decoded points;

determining, by the decoding end, K first target neighboring points in a plurality of candidate neighboring points based on a geometric distance and an attribute distance between the to-be-decoded point and each candidate neighboring point in the plurality of candidate neighboring points; where the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

performing, by the decoding end, attribute prediction on the to-be-decoded point based on an attribute value of each first target neighboring point to obtain an attribute predicted value of the to-be-decoded point; and

determining, by the decoding end, an attribute reconstruction value of the to-be-decoded point based on the attribute predicted value of the to-be-decoded point and an attribute residual of the to-be-decoded point; where the attribute residual of the to-be-decoded point is obtained by parsing the encoded bitstream.

According to a third aspect, an attribute encoding apparatus is provided, including:

a first determining module, configured to determine K first target neighboring points in a plurality of candidate neighboring points based on a geometric distance and an attribute distance between a to-be-encoded point and each candidate neighboring point in the plurality of candidate neighboring points; where the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;

a prediction module, configured to perform attribute prediction on the to-be-encoded point based on an attribute value of each first target neighboring point to obtain an attribute predicted value of the to-be-encoded point; and

a generating module, configured to encode an attribute residual of the to-be-encoded point to generate an encoded bitstream corresponding to the to-be-encoded point; where the attribute residual of the to-be-encoded point is determined based on the attribute predicted value of the to-be-encoded point and an original attribute value of the to-be-encoded point.

According to a fourth aspect, an attribute decoding apparatus is provided, including:

a parsing module, configured to parse an obtained encoded bitstream to obtain a to-be-decoded point and a plurality of already-decoded points;

a first determining module, configured to determine K first target neighboring points in a plurality of candidate neighboring points based on a geometric distance and an attribute distance between the to-be-decoded point and each candidate neighboring point in the plurality of candidate neighboring points; where the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

a prediction module, configured to perform attribute prediction on the to-be-decoded point based on an attribute value of each first target neighboring point to obtain an attribute predicted value of the to-be-decoded point; and

a second determining module, configured to determine an attribute reconstruction value of the to-be-decoded point based on the attribute predicted value of the to-be-decoded point and an attribute residual of the to-be-decoded point; where the attribute residual of the to-be-decoded point is obtained by parsing the encoded bitstream.

According to a fifth aspect, an electronic device is provided, where the electronic device includes a processor and a memory, where a program or instructions capable of running on the processor are stored in the memory, and when the program or the instructions are executed by the processor, the steps of the method according to the first aspect are implemented or the steps of the method according to the second aspect are implemented.

According to a sixth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a seventh aspect, a chip is provided, where the chip includes a processor and a communication interface, the communication interface is coupled to the processor, and the processor is configured to run a program or an instruction to implement the method according to the first aspect or the method according to the second aspect.

According to an eighth aspect, a computer program/program product is provided, where the computer program/program product is stored in a storage medium, and the computer program/program product is executed by at least one processor to implement the steps of the method according to the first aspect are implemented, or the steps of the method according to the second aspect.

In the embodiments of this application, K first target neighboring points in a plurality of candidate neighboring points are determined based on the geometric distance and the attribute distance between the to-be-encoded point and each candidate neighboring point in the plurality of candidate neighboring points; attribute prediction is performed on the to-be-encoded point based on the attribute value of each first target neighboring point to obtain an attribute predicted value of the to-be-encoded point; and the attribute residual of the to-be-encoded point is encoded to generate an encoded bitstream corresponding to the to-be-encoded point. Compared with the related art where nearest neighboring points are determined only based on geometric information of already-encoded points, in this embodiment, the nearest neighboring points are determined based on the geometric distance and attribute distance between the to-be-encoded point and each candidate neighboring point, so that the spatial distance between the nearest neighboring points and the to-be-encoded point is relatively small and the attribute values do not differ greatly. Then attribute encoding is performed on the to-be-encoded point based on the attribute values of the nearest neighboring points, so as to obtain an encoded bitstream with less information redundancy, thereby reducing the bitrate of the encoded bitstream.

**BRIEF DESCRIPTION OF DRAWINGS**

FIG. 1 is a schematic diagram of part of a framework of a G-PCC point cloud encoding apparatus;
FIG. 2 is a schematic diagram of part of a framework of a G-PCC point cloud decoding apparatus;
FIG. 3 is a schematic diagram of an application scenario for updating nearest neighboring points;
FIG. 4 is a schematic diagram of an application scenario of method distribution relation;
FIG. 5 is a schematic flowchart of an attribute encoding method according to an embodiment of this application;
FIG. 6 is a schematic application flowchart of an attribute encoding method according to an embodiment of this application;
FIG. 7 is a schematic flowchart of an attribute decoding method according to an embodiment of this application;
FIG. 8 is a structural diagram of an attribute encoding apparatus according to an embodiment of this application;
FIG. 9 is a structural diagram of an attribute decoding apparatus according to an embodiment of this application;
FIG. 10 is a structural diagram of an electronic device according to an embodiment of this application; and
FIG. 11 is a schematic diagram of a hardware structure of a terminal according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, based on a determining result, an operation that needs to be performed or a request result.

The attribute encoding apparatus corresponding to the attribute encoding method and the attribute decoding apparatus corresponding to the attribute decoding method in the embodiments of this application may be terminals. The terminal may be a terminal device or user equipment (User Equipment, UE). The terminal may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that a specific type of the terminal is not limited in the embodiments of this application.

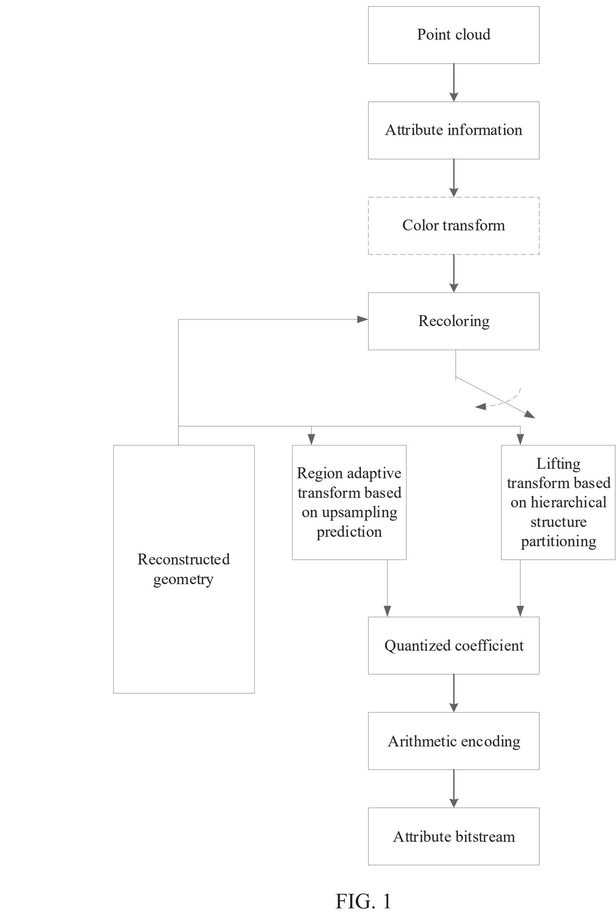

For ease of understanding, the following describes some content involved in the embodiments of this application: Referring to FIG. 1, as shown in FIG. 1, currently, in the digital audio and video encoding/decoding standard, a geometry-based point cloud compression (Geometry Point Cloud Compression, G-PCC) point cloud encoding apparatus may be used to encode attribute information of a point cloud. Specifically, color transform and recoloring may be performed on the attribute information of the point cloud; then, based on reconstructed geometry information, a region adaptive transform based on upsampling prediction or a lifting transform based on hierarchical structure partitioning is performed on the recolored attribute information to obtain transform coefficients; the transform coefficients are quantized to obtain quantized coefficients; and finally, arithmetic encoding is performed on the quantized coefficients to obtain an attribute bitstream.

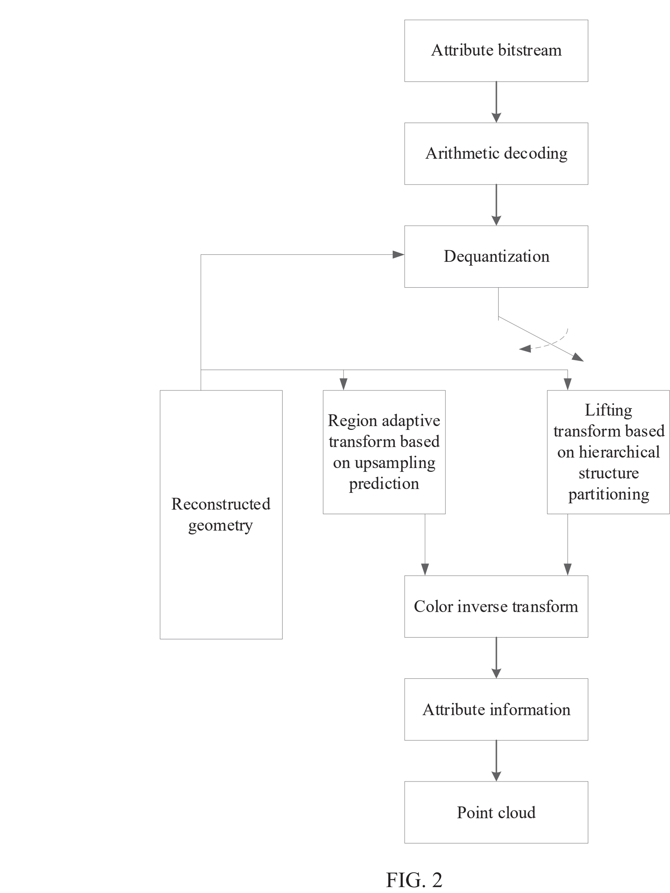

Referring to FIG. 2, as shown in FIG. 2, currently, in the digital audio and video encoding/decoding standard, a G-PCC point cloud decoding apparatus may be used to decode the attribute information of the point cloud. It should be understood that the implementation process of decoding the attribute information of the point cloud by the G-PCC point cloud decoding apparatus is an inverse process of its encoding process, and will not be repeatedly described here.

It should be noted that the process of encoding attribute information of a point cloud generally includes a level of detail (Level of Detail, LOD)-based lifting transform and a LOD-based predicting transform.

In the LOD-based lifting transform, points in the point cloud are first sorted according to Morton order. Optionally, the Morton ordering may be performed in the following manner:

A variable $P_i$ indicates a point in the input point cloud, and a variable $M_i$ is a Morton code related to $P_i$. Each dimension component of the geometric three-dimensional coordinates $x$, y, and z of the point is represented by a d-bit binary number:

$$x = \sum_{l=1}^{d} 2^{d-l} x_l \qquad y = \sum_{l=1}^{d} 2^{d-l} y_l \qquad z = \sum_{l=1}^{d} 2^{d-l} z_l \quad ,$$

where

$x_l, y_l, z_l \in \{0,1\}$ are binary values corresponding to the most significant bit ($l = 1$) to the least significant bit ($l = d$) of $x$, $y$, and z respectively. Morton ordering is performed on $x$, $y$, and z by sequentially starting from the most significant bit, where the formula for calculating a Morton code of each point is as follows:

$$M = \sum_{l=1}^{d} 2^{3(d-l)}(4x_l + 2y_l + z_l) = \sum_{l'=1}^{3d} 2^{3d-l'} m_{l'} \quad ,$$

where

$m_{l'} \in \{0,1\}$ are values from the most significant bit ($l' = 1$) to the least significant bit ($l' = 3d$) of $M$, respectively. After the Morton code M of each point in the point cloud is obtained, the points are rearranged in ascending order of the Morton codes.

An LOD is constructed for the point cloud based on an iterative down-sampling manner, including but not limited to distance-based, sampling-rate-based, and octree-structure-based, so as to establish a hierarchical structure of the point cloud. In some specific embodiments, the sampling-rate-based partitioning manner is as follows: to divide the point cloud into four detail levels, indices of points sorted by Morton value are sampled at a rate of y times, such that one point out of every y indices is assigned to a refinement level, and the rest are assigned to the lowest LOD level. For each additional refinement level, the remaining unsampled points in the point indices continue to be sampled at a rate of y times, with one point out of every y indices being assigned to the new refinement level and the rest being assigned to the current detail level LOD. This process iterates until all points have been sampled to obtain the highest detail level LOD, thereby constructing the final LOD structure of the point cloud.

One optional implementation is: points from lower levels and already-reconstructed points in the same level may be used to predict points in higher levels, with the lower-level points and same-level points serving as reference points.

Another optional implementation is: nearest neighbors of a current to-be-encoded point are searched among reconstructed points in previously encoded frames, so as to perform attribute prediction. Specifically, Morton code of the current to-be-encoded point is set to be q. In the previous encoded frame, the 1st point whose Morton code is greater than or equal to q is found according to the point index order of that frame. All points in the LOD level to which the point belongs are taken as the reference point set, points within a specific range are searched, a geometric distance between each point and the to-be-encoded point is calculated and compared with the distances of neighboring points found in the same frame, and finally a plurality of prediction points are selected.

It should be noted that, after a plurality of neighboring points of the to-be-encoded point are determined, a directional distribution judgment needs to be performed so that the neighbor distribution covers a plurality of directions, thereby improving prediction accuracy.

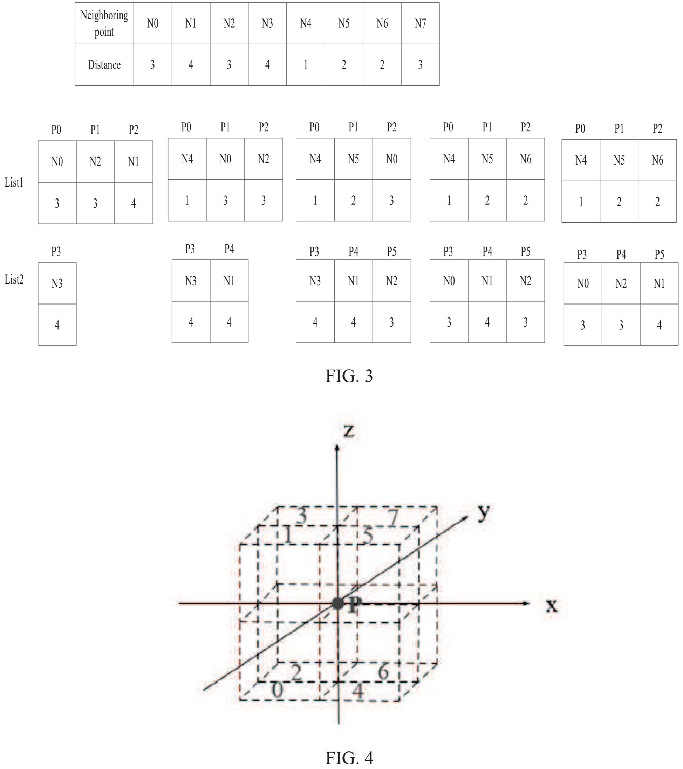

Specifically, two lists (List), namely List1 and List2, may be constructed, where List1 contains a plurality of nearest neighbors obtained using the G-PCC neighbor search method of the related art, and List2 contains the N points discarded during the updating of the nearest neighbors. For example, if N=3, the process of generating List1 and List2 is shown in FIG. 3.

FIG. 3 shows eight neighboring points N0 to N7 and a distance between each neighboring point and the to-be-encoded point. In FIG. 3, if points in List1, such as P1 and P2, P1 and P0, and P2 and P0 shown in the figure, do not satisfy strict opposition in direction, it indicates that distribution of neighboring points is not sufficiently wide. Therefore, List2 is sequentially searched according to the candidate point order in List2 to determine whether a neighboring point that is strictly opposite in direction to the points in List1 is present. If such a point is present and satisfies a specific geometric distance constraint, the search is stopped and it is used to update the farthest nearest neighbor in List1 from the current to-be-encoded point.

If no point satisfying the above condition is present in List2, and at least one pair of points in List1 such as P1 and P2, P1 and P0, P2 and P0 shown in the figure satisfies loose opposition in direction, no update of the farthest neighboring point is required.

If no point satisfying the above condition is present in List2, and points in List1 cannot satisfy loose opposition in direction for at least one pair of points, List2 is sequentially searched according to the candidate point order to determine whether a candidate point that is loosely opposite in direction to the points in List1 is present in List2. If such a point is present and satisfies a specific geometric distance constraint, the search is stopped and it is used to update the farthest nearest neighboring point in List1 from the current to-be-encoded point.

It should be understood that a directional distribution relationship between points may be determined via FIG. 4.

For example, in the application scenario shown in FIG. 4, point P is a to-be-encoded point, and a three-dimensional coordinate system is constructed with the to-be-encoded point as an origin of the coordinate axes.

If one point is located in a region labelled 0 and another point is located in a region labelled 7, it is determined that the directional distribution relationship between the two points is strict opposition. If one point is located in a region labelled 1 and another point is located in a region labelled 6, it is determined that the directional distribution relationship between the two points is strict opposition. If one point is located in a region labelled 2 and another point is located in a region labelled 6, it is determined that the directional distribution relationship between the two points is strict opposition. If one point is located in a region labelled 3 and another point is located in a region labelled 4, it is determined that the directional distribution relationship between the two points is strict opposition.

If one point is located in the region labelled 0 and another point is located in a region labelled 3, 5, or 6, it is determined that the directional distribution relationship between the two points is loose opposition. If one point is located in the region labelled 1 and another point is located in a region labelled 2, 4, or 7, it is determined that the directional distribution relationship between the two points is loose opposition. If one point is located in the region labelled 2 and another point is located in a region labelled 1, 4, or 7, it is determined that the directional distribution relationship between the two points is loose opposition. If one point is located in the region labelled 3 and another point is located in a region labelled 0, 5, or 6, it is determined that the directional distribution relationship between the two points is loose opposition. If one point is located in the region labelled 4 and another point is located in a region labelled 1, 2, or 7, it is determined that the directional distribution relationship between the two points is loose opposition. If one point is located in the region labelled 5 and another point is located in a region labelled 0, 3, or 6, it is determined that the directional distribution relationship between the two points is loose opposition. If one point is located in the region labelled 6 and another point is located in a region labelled 3, 5, or 0, it is determined that the directional distribution relationship between the two points is loose opposition. If one point is located in the region labelled 7 and another point is located in a region labelled 1, 2, or 4, it is determined that the directional distribution relationship between the two points is loose opposition.

After determining the nearest neighboring points, the attribute information of the point to be predicted may be predicted by the following formula:

$$A_i = \sum_{j=1}^{k} w_j A_j$$

where $A_i$ is an attribute predicted value of the current point, k is the number of neighboring points, $A_j$ is an attribute reconstruction value of the neighboring point, and $w_j$ is a corresponding weight coefficient, generally given by the following formula:

$$w_j = \frac{f(d_{ij})}{\sum_{j=1}^{k} f(d_{ij})}$$

where $d_{ij}$ is a distance between the neighboring point and the point to be predicted, and $f(d_{ij})$ is a function related to $d_{ij}$. That is, according to the distance between each neighboring point and the point to be predicted, the correlation decreases as the distance increases; therefore, a larger weight is assigned to an attribute reconstruction value of a neighboring point with a smaller distance.

In the LOD-based predicting transform, rate-distortion optimization technology is introduced. That is, corresponding predicted values and corresponding prediction modes for the neighboring points are determined, and the prediction mode is selected using a rate-distortion method. Finally, the selected prediction mode and the quantized residual are jointly encoded into a bitstream of the attribute information.

In the G-PCC point cloud attribute encoding process, the nearest neighboring points corresponding to the to-be-encoded point are determined only based on geometric information of already-encoded points, and then weighted prediction is performed on attribute values of the nearest neighboring points to obtain an attribute predicted value of the to-be-encoded point. However, in a point cloud, there may be cases where a spatial distance between the to-be-encoded point and nearby prediction points is relatively small, but their attribute values differ significantly. If nearest neighboring points are determined based on the geometric information of the already-encoded points and attribute encoding is performed on the to-be-encoded point based on the attribute values of the nearest neighboring points, an encoded bitstream with information redundancy is likely to be obtained.

To resolve the above technical problems, this application provides an attribute encoding method, where the attribute encoding method may be applied to an encoding end. The following specifically describes the attribute encoding method provided in the embodiments of this application through specific embodiments and application scenarios thereof with reference to the accompanying drawings.

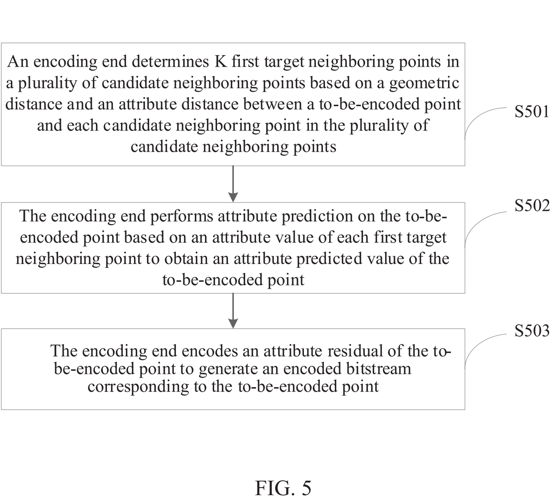

Refer to FIG. 5. FIG. 5 is a flowchart of an attribute encoding method according to an embodiment of this application. The attribute encoding method provided in this embodiment includes the following steps:

S501: An encoding end determines K first target neighboring points in a plurality of candidate neighboring points based on a geometric distance and an attribute distance between a to-be-encoded point and each candidate neighboring point in the plurality of candidate neighboring points.

In this step, color transform and recoloring processing may be performed on a point cloud to obtain a recolored geometry-reconstructed point cloud. Ordering of points in the point cloud is determined based on a space-filling curve based on the geometry information of the point cloud. The ordering manners include, but are not limited to, Morton ordering and Hilbert ordering.

LOD partitioning is performed on the geometrically ordered point cloud to construct a hierarchical structure of the point cloud. The partitioning manners include, but are not limited to, distance-based, sampling-rate-based, and octree-structure-based partitioning on the point cloud.

One optional implementation is: after points at lower levels are encoded first, points at lower levels and already-reconstructed points at the same level are used to predict points at higher levels, with the lower-level points and same-level points serving as reference points, so as to obtain candidate neighboring points. Another optional implementation is: in a multi-frame sequence, reconstructed points from already-encoded frames may also be used for prediction, with reference frame points having high correlation serving as reference points. In this case, the reference frame and the to-be-encoded point are in different temporal frames, and points within a specific search range among the reference points are taken as candidate neighboring points.

It should be noted that the candidate neighboring points are at least part of the plurality of already-encoded points.

In this step, after the candidate neighboring points is determined, the geometric distance between the to-be-encoded point and each candidate neighboring point in the plurality of candidate neighboring points is obtained, and the attribute distance between the to-be-encoded point and each candidate neighboring point in the plurality of candidate neighboring points is determined, where the attribute distance is determined based on attribute information of the to-be-encoded point and attribute information of the candidate neighboring point. Optionally, the attribute distance between the to-be-encoded point and the candidate neighboring point may be determined based on a difference between the attribute value of the to-be-encoded point and the attribute value of the candidate neighboring point.

Then, K first target neighboring points in the plurality of candidate neighboring points are determined based on the geometric distance and the attribute distance between the to-be-encoded point and each candidate neighboring point, where K is a positive integer greater than or equal to 1. The first target neighboring points may be understood as the K candidate neighboring points that have a relatively small geometric distance from the to-be-encoded point and a smallest difference in attribute values.

S502: The encoding end performs attribute prediction on the to-be-encoded point based on an attribute value of each first target neighboring point to obtain an attribute predicted value of the to-be-encoded point.

One optional implementation is to calculate the attribute predicted value of the to-be-encoded point using the following formula:

$$predAttr = \frac{\sum\limits_{i=0}^{i<nearestNeighNum} w[i] \cdot reconAttr[i]}{\sum\limits_{j=0}^{j<nearestNeighNum} w[i]}$$

,

where

predAttr represents the attribute predicted value of the current to-be-encoded point, nearestNeighNum represents the number of nearest neighboring points finally selected for predicting the to-be-encoded point, reconAttr[i] represents an attribute reconstruction value of the i-th nearest neighboring point, and w[i] is a weight coefficient corresponding to the i-th nearest neighboring point, which may be determined based on a target distance or geometric distance between the to-be-encoded point and the first target neighboring point. Optionally, the weight coefficient may be a reciprocal of the target distance between the to-be-encoded point and the first target neighboring point.

Another optional implementation is to calculate a rate-distortion cost corresponding to each first target neighboring point, and then perform attribute prediction on the to-be-encoded point using the first target neighboring point with a smallest rate-distortion cost, so as to obtain the attribute predicted value of the to-be-encoded point.

S503: The encoding end encodes an attribute residual of the to-be-encoded point to generate an encoded bitstream corresponding to the to-be-encoded point.

It should be understood that the attribute residual of the to-be-encoded point is determined based on the attribute predicted value of the to-be-encoded point and an original attribute value of the to-be-encoded point. Optionally, a difference between the original attribute value and the attribute predicted value of the to-be-encoded point may be determined as the attribute residual of the to-be-encoded point, and then the attribute residual of the to-be-encoded point is encoded to generate an encoded bitstream corresponding to the to-be-encoded point.

In this embodiment of this application, K first target neighboring points in a plurality of candidate neighboring points are determined based on the geometric distance and the attribute distance between the to-be-encoded point and each candidate neighboring point in the plurality of candidate neighboring points; attribute prediction is performed on the to-be-encoded point based on the attribute value of each first target neighboring point to obtain an attribute predicted value of the to-be-encoded point; and the attribute residual of the to-be-encoded point is encoded to generate an encoded bitstream corresponding to the to-be-encoded point. Compared with the related art where nearest neighboring points are determined only based on geometric information of already-encoded points, in this embodiment, the nearest neighboring points are determined based on the geometric distance and attribute distance between the to-be-encoded point and each candidate neighboring point, so that the spatial distance between the nearest neighboring points and the to-be-encoded point is relatively small and the attribute values do not differ greatly. Then attribute encoding is performed on the to-be-encoded point based on the attribute values of the nearest neighboring points, so as to obtain an encoded bitstream with less information redundancy, thereby reducing the bitrate of the encoded bitstream.

Optionally, the determining K first target neighboring points in a plurality of candidate neighboring points based on a geometric distance and an attribute distance between a to-be-encoded point and each candidate neighboring point in the plurality of candidate neighboring points includes:

calculating a geometric distance between the to-be-encoded point and each candidate neighboring point, and determining an attribute distance between the to-be-encoded point and each candidate neighboring point based on the attribute information of the to-be-encoded point and the attribute information of each candidate neighboring point; determining a target distance between the to-be-encoded point and each candidate neighboring point based on a geometric distance and an attribute distance between the to-be-encoded point and each candidate neighboring point; determining K candidate neighboring points with a smallest corresponding target distance in the plurality of candidate neighboring points as K first neighboring points; and updating the K first neighboring points based on a directional distribution relationship between the to-be-encoded point and each first neighboring point to obtain the K first target neighboring points.

In this embodiment, the geometric information of the to-be-encoded point and the geometric information of each candidate neighboring point may be obtained, and then the geometric distance between the to-be-encoded point and each candidate neighboring point may be calculated based on the geometric information of the to-be-encoded point and the geometric information of each candidate neighboring point. The geometric information includes geometric coordinates, which may be Cartesian coordinates, spherical coordinates, cylindrical coordinates, or the like, and the geometric distance between the to-be-encoded point and the candidate neighboring points may be Euclidean distance or Manhattan distance between the to-be-encoded point and the candidate neighboring points.

In this embodiment, the attribute information of the to-be-encoded point and the attribute information of each candidate neighboring point are obtained, and then the attribute distance between the to-be-encoded point and each candidate neighboring point is determined based on the attribute information of the to-be-encoded point and the attribute information of each candidate neighboring point, where the attribute distance may represent a difference between the attribute information of the to-be-encoded point and the attribute information of the candidate neighboring point.

It should be understood that the attribute information includes two types: reflectance information and color information, where color information further includes Y component information, U component information, and V component information.

After the geometric distance and attribute distance between the to-be-encoded point and each candidate neighboring point are determined, a target distance between the to-be-encoded point and each candidate neighboring point is determined based on the geometric distance and the attribute distance. Optionally, the geometric distance and attribute distance between the to-be-encoded point and each candidate neighboring point may be weighted and summed to obtain the target distance between the to-be-encoded point and each candidate neighboring point. For the specific implementation of how to determine the target distance between the to-be-encoded point and each candidate neighboring point, refer to the subsequent embodiments.

The target distance may represent a correlation between the attribute information of the to-be-encoded point and the attribute information of the candidate neighboring point, and may also represent a correlation between the geometric information of the to-be-encoded point and the geometric information of the candidate neighboring points. Therefore, the K candidate neighboring points with the smallest corresponding target distance in the plurality of candidate neighboring points may be determined as K first neighboring points, that is, a geometric distance between the K first neighboring points and the to-be-encoded point is relatively close, and attribute information of the K first neighboring points is not much different from the attribute information of the to-be-encoded point.

In this embodiment, based on a directional distribution relationship between the to-be-encoded point and each first neighboring point, the K first neighboring points are updated to obtain updated K first target neighboring points.

In this embodiment, the nearest neighboring point is determined based on the geometric distance and the attribute distance between the to-be-encoded point and each candidate neighboring point, and then the first target neighboring point which is close to the to-be-encoded point in space and whose attribute value is also close to the to-be-encoded point is obtained.

In other embodiments, after a plurality of candidate neighboring points are determined, the geometric distance between the to-be-encoded point and each candidate neighboring point is calculated, K first neighboring points are determined, and the K first neighboring points are updated based on the directional distribution relationship between the to-be-encoded point and each first neighboring point. Then, based on the target distance between the to-be-encoded point and each updated first neighboring point, the K updated first neighboring points are sorted to obtain K first target neighboring points.

In other embodiments, after a plurality of candidate neighboring points are determined, the geometric distance between the to-be-encoded point and each candidate neighboring point is calculated, K first neighboring points are determined, and the K first neighboring points are updated based on the target distance between the to-be-encoded point and each first neighboring point. Then, based on a directional distribution relationship between the to-be-encoded point and each updated first neighboring point, K first target neighboring points are obtained.

Optionally, the determining an attribute distance between the to-be-encoded point and each candidate neighboring point based on the attribute information of the to-be-encoded point and the attribute information of each candidate neighboring point includes:

for any one first candidate neighboring point in the plurality of candidate neighboring points, calculating an attribute absolute difference value between an attribute value of the to-be-encoded point and an attribute value of the first candidate neighboring point; where the attribute value of the to-be-encoded point is determined based on the attribute information of the to-be-encoded point, the attribute value of the first candidate neighboring point is determined based on attribute information of the first candidate neighboring point, and the attribute information of the to-be-encoded point and the attribute information of the first candidate neighboring point are of a same attribute type; and
determining a product between a weight value corresponding to the first candidate neighboring point and the attribute absolute difference value as an attribute distance between the to-be-encoded point and the first candidate neighboring point.

In this embodiment, the attribute distance between the to-be-encoded point and the first candidate neighboring point may be determined by the following formula:

$$\text{attrDis} = \sum_{i=0}^{i<dimAttr} wAttr[i] \cdot |attrCur[i] - attrNeighbour[i]|$$

where attrDis represents attribute information of an already-encoded type of the to-be-encoded point, attrNeighbour represents attribute information of the first candidate neighboring point, and types of the two attribute information are the same; dimAttr represents the number of components contained in the attribute information; and wAttr[i] represents a preset weight occupied by the i-th component of attribute information during calculation of the attribute distance.

In this embodiment, because the attribute distance between the to-be-encoded point and the candidate neighboring points is determined based on the attribute information of the to-be-encoded point and the attribute information of the candidate neighboring point, the attribute distance between the to-be-encoded point and the candidate neighboring points can accurately represent the difference between the attribute information of the to-be-encoded point and the attribute information of each candidate neighboring point.

Optionally, the determining a target distance between the to-be-encoded point and each candidate neighboring point based on a geometric distance and an attribute distance between the to-be-encoded point and each candidate neighboring point includes:

for any one second candidate neighboring point in the plurality of candidate neighboring points, determining a sum of a first product corresponding to the second candidate neighboring point and a second product corresponding to the second candidate neighboring point as a target distance between the to-be-encoded point and the second candidate neighboring point; where
the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

In this embodiment, a target distance between the to-be-encoded point and a second candidate neighboring point may be determined by the following formula:

$$overallDis = geomW \cdot geomDis + \sum_{i=0}^{i<attrCodedNum} attrW[i] \cdot attrDis[i]$$

where overallDis represents the target distance, geomDis represents a geometric distance, attrDis [i] represents the i-th already-encoded attribute distance of a different type, attrCodedNum represents the number of types of already-encoded attribute information, geomW represents a weight corresponding to the geometric distance, and attrW[i] represents a weight corresponding to the i-th already-encoded attribute distance of a different type.

Optionally, the weight corresponding to the i-th already-encoded attribute distance of a different type may be determined by the following formula:

$$attrW[i] = k \cdot attrQuantParam + b$$

where k and b are arbitrary real numbers, and attrQuantParam represents a preset attribute quantization parameter.

In other embodiments, the geometric distance and the attribute distance between the to-be-encoded point and the candidate neighboring point can also be weighted and summed to obtain the target distance between the to-be-encoded point and the candidate neighboring point.

Optionally, the updating the K first neighboring points based on a directional distribution relationship between the to-be-encoded point and each first neighboring point includes:

in a case that a directional distribution relationship between the to-be-encoded point and any two first neighboring points is not opposite in direction, updating part of first neighboring points with a largest target distance from the to-be-encoded point in the K first neighboring points to second target neighboring points in N second neighboring points; where
the N second neighboring points are part of neighboring points other than the K first neighboring points in the plurality of candidate neighboring points, the second target neighboring point is a second neighboring point meeting a preset condition in the N second neighboring points, and N is a positive integer greater than or equal to 1; and
the preset condition includes:

a target distance between the second neighboring point and the to-be-encoded point is less than or equal to a preset distance; and
a direction between the second neighboring point and the to-be-encoded point is opposite to a direction between any one first neighboring point and the to-be-encoded point, and the any one first neighboring point is a first neighboring point in the K first neighboring points other than a first neighboring point with a largest target distance from the to-be-encoded point.

In this embodiment, the directional distribution relationship between the to-be-encoded point and any two first neighboring points is determined, and the K first neighboring points are updated when the directional distribution relationship between the to-be-encoded point and the any two first neighboring points is not in opposite directions. For the implementation of how to determine the directional distribution relationship between the to-be-encoded point and the any two first neighboring points, refer to the above embodiment. Details are repeatedly described here.

A specific scheme for updating K first neighboring points is as follows:
N neighboring points other than the K first neighboring points in the plurality of candidate neighboring points are determined as N second neighboring points, and second neighboring points in the N second neighboring points that meet a preset condition are determined as second target neighboring points. The number of second target neighboring points may be one or a plurality.

The preset condition includes: a target distance between the second neighboring point and the to-be-encoded point is less than or equal to a preset distance; and a direction between the second neighboring point and the to-be-encoded point is opposite to a direction between any one first neighboring point and the to-be-encoded point, where the any one first neighboring point is a first neighboring point in the K first neighboring points other than first neighboring points with a largest target distance from the to-be-encoded point. Optionally, the target distance between the second neighboring point and the to-be-encoded point being less than or equal to the preset distance that is included in the preset condition may be replaced by a geometric distance between the second neighboring point and the to-be-encoded point being less than or equal to the preset distance.

For example, the target distance between the second neighboring point and the to-be-encoded point is less than the preset distance, a direction between the second neighboring point and the to-be-encoded point is located in a region labelled 0 in FIG. 4, a direction between the first neighboring point and the to-be-encoded point is located in a region labelled 7 in FIG. 4, and the first neighboring point is not a first neighboring point with a largest target distance from the to-be-encoded point in the K first neighboring points. In this case, it is determined that the second neighboring point is a second target neighboring point that meets the preset condition.

Optionally, one first neighboring point with a largest target distance from the to-be-encoded point in the K first neighboring points may be updated to one second target neighboring point in the N second target neighboring points; or a plurality of first neighboring points with a largest target distance from the to-be-encoded point in the K first neighboring points may be updated to a plurality of second target neighboring points in the N second neighboring points. This embodiment does not limit the specific number of the second target neighboring points here.

In this embodiment, part of first neighboring points with a largest target distance from the to-be-encoded point in the K first neighboring points are updated to second target neighboring points, so that a directional distribution of the updated K first target neighboring points is opposite to the directional distribution of the to-be-encoded point, thereby improving accuracy of determining the attribute predicted value of the to-be-encoded point based on the K first target neighboring points.

Optionally, before the determining K first target neighboring points in a plurality of candidate neighboring points based on a geometric distance and an attribute distance between a to-be-encoded point and each candidate neighboring point in the plurality of candidate neighboring points, the method further includes:

obtaining point cloud data; where the point cloud data includes a to-be-encoded point, a plurality of already-encoded points, and an encoding identifier; and
in a case that attribute information of the plurality of already-encoded points corresponds to different attribute types and the encoding identifier is used to indicate performing attribute encoding on the to-be-encoded point based on an attribute type, determining the geometric distance and the attribute distance between the to-be-encoded point and each candidate neighboring point.

In this embodiment, point cloud data is obtained, and the point cloud data includes a to-be-encoded point, a plurality of already-encoded points, and an encoding identifier, where the encoding identifier is also referred to as an enabling identifier for inter-attribute prediction, and optionally, a sequence parameter set of the point cloud or an attribute parameter set of the point cloud includes the encoding identifier.

In a case that attribute information of the plurality of already-encoded points corresponds to different attribute types and the encoding identifier is used to indicate performing attribute encoding on the to-be-encoded point based on an attribute type, the attribute encoding method provided in the embodiments of this application is used to perform attribute encoding on the to-be-encoded point, that is, the step of determining the geometric distance and the attribute distance between the to-be-encoded point and each candidate neighboring point is performed.

In this embodiment, an encoding identifier is set. In a case that attribute information of the plurality of already-encoded points corresponds to different attribute types and the encoding identifier is used to indicate performing attribute encoding on the to-be-encoded point based on an attribute type, the attribute encoding method provided in this embodiment of this application is used to perform attribute encoding on the to-be-encoded point, that is, different types of already-encoded attribute information are introduced into attribute prediction to measure a correlation between the point to be predicted and the neighboring points, so as to improve the efficiency of attribute encoding.

For ease of understanding the technical effects generated by the attribute encoding method provided in the embodiments of this application, refer to table 1 and table 2.

**Table 1**

|  | Y component | U component | V component |
|---|---|---|---|
| Point cloud type 1 | -6.5% | -5.7% | -6.3% |
| Point cloud type 2 | -4.5% | -5.1% | -6.1% |

**Table 2**

|  | Reflectivity |
|---|---|
| Point cloud type 3 | -6.7% |
| Point cloud type 4 | -4.7% |

The numerical values in table 1 and table 2 are used to represent a bitrate ratio between the bitstream generated by attribute encoding provided in the embodiments of this application and a bitstream generated by related technologies, under a same peak signal-to-noise ratio. It should be understood that a smaller numerical value indicates a larger bitrate reduction.

For example, the "-6.5%" in the second row and the second column in table 1 indicates that a bitstream corresponding to the Y component generated by transform coefficient encoding provided in the embodiments of this application achieves a 6.5% bitrate reduction compared to a bitstream corresponding to the Y component generated by the related technology.

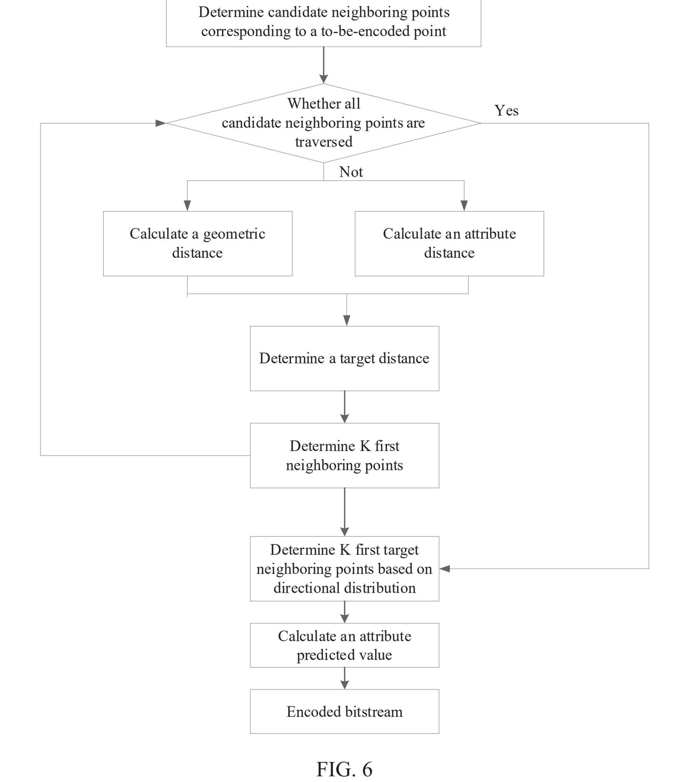

For ease of understanding the overall technical solution, refer to FIG. 6. As shown in FIG. 6, the candidate neighboring points corresponding to the to-be-encoded point are determined, the geometric distance and the attribute distance between the to-be-encoded point and each candidate neighboring point are calculated, then the target distance between the to-be-encoded point and each candidate neighboring point is determined based on the geometric distance and the attribute distance, and K first neighboring points are determined based on the target distance. After traversing all candidate neighboring points, the K first neighboring points are updated based on the directional distribution relationship between the to-be-encoded point and each first neighboring point to obtain K first target neighboring points, and then the K first target neighboring points are used for attribute prediction of the to-be-encoded point to obtain the attribute predicted value of the to-be-encoded point, and the encoded bitstream is obtained by encoding the attribute predicted value.

In other embodiments, a correlation between different types of attribute information may be used to perform piecewise fitting on a regression curve between a type corresponding to the attribute information of the to-be-encoded point and a type corresponding to the attribute information of the already-encoded point. The type corresponding to the attribute information of the to-be-encoded point is also referred to as a to-be-encoded type, and the type corresponding to the attribute information of the already-encoded point is also referred to as an already-encoded type. Optionally, the form of the regression curve includes but is not limited to the form of a linear function. Optionally, L points may be sequentially selected from the point cloud, and the selected L points are formed into a point set, where L may be a positive integer greater than or equal to 20. Based on the to-be-encoded type and the already-encoded type of the L points, the model parameters are determined. For example, the least squares method may be used to fit a straight line, to obtain a fitted line y = ax + b between a plurality of attributes. It should also be noted that lines may be fitted using a manner different from the least squares method, such as a gradient descent method or a Gauss-Newton method.

For each to-be-encoded point, the predicted value of the to-be-encoded type is calculated by using the attribute reconstruction value of the already-encoded type and a prediction model, and then the predicted residual is obtained by checking the predicted value and the original attribute value, and the predicted residual is encoded to obtain the bitstream.

The decoding end parses out a parameter of the prediction model, then determines a prediction value corresponding to the to-be-decoded point based on the parameter, and obtains the attribute reconstruction value of the to-be-decoded point based on the prediction value and the predicted residual.

In other embodiments, a correlation between different types of attribute information may be used to perform piecewise fitting on a regression curve between a type corresponding to the attribute information of the to-be-encoded point and a type corresponding to the attribute information of the already-encoded point.

For each to-be-encoded point, using a parameter of a prediction model of the to-be-encoded point, the attribute residual of the to-be-encoded type is represented based on the attribute residual of the already-encoded type.

The decoding end parses out a parameter of the prediction model, then determines a prediction value corresponding to the to-be-decoded point based on the parameter, and obtains the attribute reconstruction value of the to-be-decoded point based on the prediction value and the predicted residual.

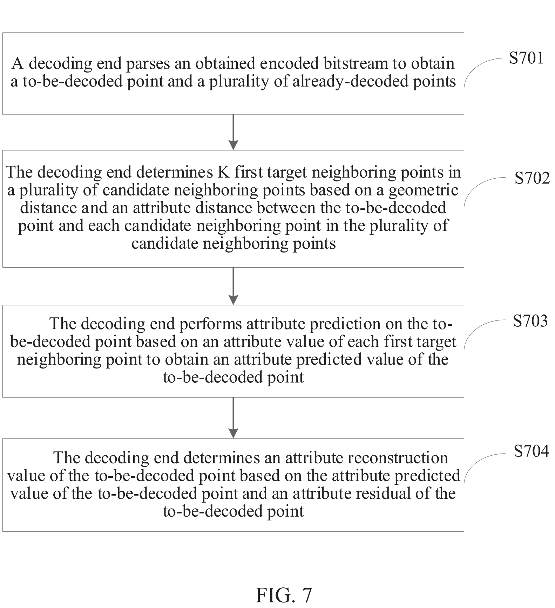

Refer to FIG. 7. FIG. 7 is a schematic flowchart of an attribute decoding method according to an embodiment of this application. The attribute decoding method provided in this embodiment includes the following steps:

S701: A decoding end parses an obtained encoded bitstream to obtain a to-be-decoded point and a plurality of already-decoded points.

In this step, the decoding end obtains the encoded bitstream and parses the encoded bitstream to obtain the to-be-decoded point and the plurality of already-decoded points.

S702: The decoding end determines K first target neighboring points in a plurality of candidate neighboring points based on a geometric distance and an attribute distance between the to-be-decoded point and each candidate neighboring point in the plurality of candidate neighboring points.

One optional implementation is: points at lower levels and already-reconstructed points at the same level are used to predict points at higher levels, with the lower-level points and same-level points serving as reference points, so as to obtain candidate neighboring points. Another optional implementation is: reconstructed points from already-decoded frames are used for prediction, with reference frame points having high correlation serving as reference points, so that points within a specific search range among the reference points are used as candidate neighboring points.

The geometric distance and the attribute distance between the to-be-decoded point and each candidate neighboring point are calculated, and then K first target neighboring points in the plurality of candidate neighboring points are determined based on the geometric distance and the attribute distance.

The candidate neighboring points are part of already-decoded points in the plurality of already-decoded points, the attribute distance is determined based on the attribute information of the to-be-decoded point and the attribute information of the candidate neighboring point, and K is a positive integer greater than or equal to 1.

S703: The decoding end performs attribute prediction on the to-be-decoded point based on an attribute value of each first target neighboring point to obtain an attribute predicted value of the to-be-decoded point.

In this step, a same manner as that used at the encoding end may be used to perform attribute prediction on the to-be-decoded point based on the attribute value of each first target neighboring point, so as to obtain the attribute predicted value of the to-be-decoded point, which is not repeated here.

S704: The decoding end determines an attribute reconstruction value of the to-be-decoded point based on the attribute predicted value of the to-be-decoded point and an attribute residual of the to-be-decoded point.

It should be understood that the attribute residual of the to-be-decoded point is obtained by parsing the encoded bitstream. Optionally, a sum of the attribute predicted value of the to-be-decoded point and the attribute residual of the to-be-decoded point may be determined as the attribute reconstruction value of the to-be-decoded point.

Compared with the related art where nearest neighboring points are determined only based on geometric information of already-decoded points, in this embodiment, the nearest neighboring points are determined based on the geometric distance and attribute distance between the to-be-decoded point and each candidate neighboring point, so that the spatial distance between the nearest neighboring points and the to-be-decoded point is relatively small and the attribute values do not differ greatly. Then attribute decoding is performed on the to-be-decoded point based on the attribute values of the nearest neighboring points, so as to complete decoding of a bitstream with less information redundancy.

Optionally, the determining K first target neighboring points in a plurality of candidate neighboring points based on a geometric distance and an attribute distance between a to-be-decoded point and each candidate neighboring point in the plurality of candidate neighboring points includes:

calculating a geometric distance between the to-be-decoded point and each candidate neighboring point, and determining an attribute distance between the to-be-decoded point and each candidate neighboring point based on the attribute information of the to-be-decoded point and the attribute information of each candidate neighboring point;

determining a target distance between the to-be-decoded point and each candidate neighboring point based on a geometric distance and an attribute distance between the to-be-decoded point and each candidate neighboring point;

determining K candidate neighboring points with a smallest corresponding target distance in the plurality of candidate neighboring points as K first neighboring points; and

updating the K first neighboring points based on a directional distribution relationship between the to-be-decoded point and each first neighboring point to obtain the K first target neighboring points.

In this embodiment, the Euclidean distance or Manhattan distance between the to-be-decoded point and the candidate neighboring point may be determined as the geometric distance between the to-be-decoded point and the candidate neighboring point. The attribute information of the to-be-decoded point and the attribute information of each candidate neighboring point are obtained, and then the attribute distance between the to-be-decoded point and each candidate neighboring point is determined based on the attribute information of the to-be-decoded point and the attribute information of each candidate neighboring point. Then, based on the geometric distance and the attribute distance, the target distance between the to-be-decoded point and each candidate neighboring point is determined.

In this embodiment, the K candidate neighboring points with the smallest corresponding target distance in the plurality of candidate neighboring points may be determined as K first neighboring points that have a relatively close geometric distance to the to-be-decoded point and whose attribute information has little difference from the attribute information of the to-be-decoded point. Then, based on a directional distribution relationship between the to-be-decoded point and each first neighboring point, the K first neighboring points are updated to obtain updated K first target neighboring points.

Optionally, the determining an attribute distance between the to-be-decoded point and each candidate neighboring point based on the attribute information of the to-be-decoded point and the attribute information of each candidate neighboring point includes:

for any one first candidate neighboring point in the plurality of candidate neighboring points, calculating an attribute absolute difference value between an attribute value of the to-be-decoded point and an attribute value of the first candidate neighboring point; where the attribute value of the to-be-decoded point is determined based on the attribute information of the to-be-decoded point, the attribute value of the first candidate neighboring point is determined based on attribute information of the first candidate neighboring point, and the attribute information of the to-be-decoded point and the attribute information of the first candidate neighboring point are of a same attribute type; and determining a product between a weight value corresponding to the first candidate neighboring point and the attribute absolute difference value as an attribute distance between the to-be-decoded point and the first candidate neighboring point.

In this embodiment, the attribute distance between the to-be-decoded point and each candidate neighboring point may be determined by the way that the encoding end determines the attribute distance, which is not repeatedly described here.

Optionally, the determining a target distance between the to-be-decoded point and each candidate neighboring point based on a geometric distance and an attribute distance between the to-be-decoded point and each candidate neighboring point includes:

for any one second candidate neighboring point in the plurality of candidate neighboring points, determining a sum of a first product corresponding to the second candidate neighboring point and a second product corresponding to the second candidate neighboring point as a target distance between the to-be-decoded point and the second candidate neighboring point; where the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

In this embodiment, the target distance between the to-be-decoded point and each candidate neighboring point may be determined by the way that the encoding end determines the target distance, which is not repeatedly described here.

Optionally, the updating the K first neighboring points based on a directional distribution relationship between the to-be-decoded point and each first neighboring point includes:

in a case that a directional distribution relationship between the to-be-decoded point and any two first neighboring points is not opposite in direction, updating part of first neighboring points with a largest target distance from the to-be-decoded point in the K first neighboring points to second target neighboring points in N second neighboring points; where the N second neighboring points are part of neighboring points other than the K first neighboring points in the plurality of candidate neighboring points, the second target neighboring point is a second neighboring point meeting a preset condition and having a smallest corresponding target distance in the N second neighboring points, and N is a positive integer greater than or equal to 1; and the preset condition includes:

a target distance between the second neighboring point and the to-be-decoded point is less than or equal to a preset distance; and

a direction between the second neighboring point and the to-be-decoded point is opposite to a direction between any one first neighboring point and the to-be-decoded point, and the any one first neighboring point is a first neighboring point in the K first neighboring points other than a first neighboring point with a largest target distance from the to-be-decoded point.

In this embodiment, the directional distribution relationship between the to-be-decoded point and any two first neighboring points is determined, and the K first neighboring points are updated when the directional distribution relationship between the to-be-decoded point and the any two first neighboring points is not in opposite directions.

The K first neighboring points may be updated by the way that the encoding end updates the K first neighboring points, which is not repeated here.

Optionally, the encoded bitstream includes a decoding identifier, and before the determining K first target neighboring points in a plurality of candidate neighboring points based on a geometric distance and an attribute distance between a to-be-decoded point and each candidate neighboring point in the plurality of candidate neighboring points, the method further includes:

in a case that attribute information of the plurality of already-decoded points corresponds to different attribute types and the decoding identifier is used to indicate performing attribute decoding on the to-be-decoded point based on an attribute type, determining the geometric distance and the attribute distance between the to-be-decoded point and each candidate neighboring point.

In this embodiment, the encoded bitstream transmitted by the encoding end includes an encoding identifier. In a case that the attribute information of the plurality of already-decoded points corresponds to different attribute types, and the decoding identifier is used to indicate performing attribute decoding on the to-be-decoded point based on an attribute type, the attribute decoding method provided in this embodiment of this application is adopted to perform attribute decoding on the to-be-decoded point, that is, the step of determining the geometric distance and attribute distance between the to-be-decoded point and each candidate neighboring point is performed.

In the attribute encoding method provided in this embodiment of this application, the executing subject may be an attribute encoding apparatus. In the embodiments of this application, the attribute encoding apparatus provided in the embodiments of this application is described by using the attribute encoding method being executed by the attribute encoding apparatus as an example.

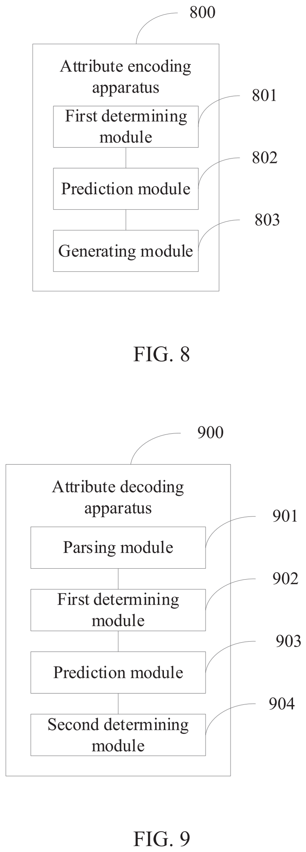

As shown in FIG. 8, an embodiment of this application further provides an attribute encoding apparatus 800, including:

a first determining module 801, configured to determine K first target neighboring points in a plurality of candidate neighboring points based on a geometric distance and an attribute distance between a to-be-encoded point and each candidate neighboring point in the plurality of candidate neighboring points; where the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;

a prediction module 802, configured to perform attribute prediction on the to-be-encoded point based on an attribute value of each first target neighboring point to obtain an attribute predicted value of the to-be-encoded point; and

a generating module 803, configured to encode an attribute residual of the to-be-encoded point to generate an encoded bitstream corresponding to the to-be-encoded point; where the attribute residual of the to-be-encoded point is determined based on the attribute predicted value of the to-be-encoded point and an original attribute value of the to-be-encoded point.

Optionally, the first determining module 801 is specifically configured to:

calculate a geometric distance between the to-be-encoded point and each candidate neighboring point, and determine an attribute distance between the to-be-encoded point and each candidate neighboring point based on the attribute information of the to-be-encoded point and the attribute information of each candidate neighboring point; determine a target distance between the to-be-encoded point and each candidate neighboring point based on a geometric distance and an attribute distance between the to-be-encoded point and each candidate neighboring point; determine K candidate neighboring points with a smallest corresponding target distance in the plurality of candidate neighboring points as K first neighboring points; and

update the K first neighboring points based on a directional distribution relationship between the to-be-encoded point and each first neighboring point to obtain the K first target neighboring points.

Optionally, the first determining module 801 is further specifically configured to:

for any one first candidate neighboring point in the plurality of candidate neighboring points, calculate an attribute absolute difference value between an attribute value of the to-be-encoded point and an attribute value of the first candidate neighboring point; where the attribute value of the to-be-encoded point is determined based on the attribute information of the to-be-encoded point, the attribute value of the first candidate neighboring point is determined based on attribute information of the first candidate neighboring point, and the attribute information of the to-be-encoded point and the attribute information of the first candidate neighboring point are of a same attribute type; and determine a product between a weight value corresponding to the first candidate neighboring point and the attribute absolute difference value as an attribute distance between the to-be-encoded point and the first candidate neighboring point.

Optionally, the first determining module 801 is further specifically configured to:

for any one second candidate neighboring point in the plurality of candidate neighboring points, determine a sum of a first product corresponding to the second candidate neighboring point and a second product corresponding to the second candidate neighboring point as a target distance between the to-be-encoded point and the second candidate neighboring point; where

the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

Optionally, the first determining module 801 is further specifically configured to:

in a case that a directional distribution relationship between the to-be-encoded point and any two first neighboring points is not opposite in direction, update part of first neighboring points with a largest target distance from the to-be-encoded point in the K first neighboring points to second target neighboring points in N second neighboring points; where

the N second neighboring points are part of neighboring points other than the K first neighboring points in the plurality of candidate neighboring points, the second target neighboring point is a second neighboring point meeting a preset condition in the N second neighboring points, and N is a positive integer greater than or equal to 1; and the preset condition includes:

a target distance between the second neighboring point and the to-be-encoded point is less than or equal to a preset distance; and
a direction between the second neighboring point and the to-be-encoded point is opposite to a direction between any one first neighboring point and the to-be-encoded point, and the any one first neighboring point is a first neighboring point in the K first neighboring points other than a first neighboring point with a largest target distance from the to-be-encoded point.

Optionally, the attribute encoding apparatus 800 further includes:

an obtaining module, configured to obtain point cloud data; where the point cloud data includes a to-be-encoded point, a plurality of already-encoded points, and an encoding identifier; and
a second determining module, configured to: in a case that attribute information of the plurality of already-encoded points corresponds to different attribute types and the encoding identifier is used to indicate performing attribute encoding on the to-be-encoded point based on an attribute type, determine the geometric distance and the attribute distance between the to-be-encoded point and each candidate neighboring point.

Compared with the related art where nearest neighboring points are determined only based on geometric information of already-encoded points, in this embodiment, the nearest neighboring points are determined based on the geometric distance and attribute distance between the to-be-encoded point and each candidate neighboring point, so that the spatial distance between the nearest neighboring points and the to-be-encoded point is relatively small and the attribute values do not differ greatly. Then attribute encoding is performed on the to-be-encoded point based on the attribute values of the nearest neighboring points, so as to obtain an encoded bitstream with less information redundancy, thereby reducing the bitrate of the encoded bitstream.

The apparatus embodiment corresponds to the foregoing attribute encoding method embodiment shown in FIG.

5, and the implementation processes and implementations on the encoding end of the foregoing method embodiments can be applied to the apparatus embodiments, with the same technical effects achieved.

In the attribute decoding method provided in this embodiment of this application, the executing subject may be an attribute decoding apparatus. In the embodiments of this application, the attribute decoding apparatus provided in the embodiments of this application is described by using the attribute decoding method being executed by the attribute decoding apparatus as an example.

As shown in FIG. 9, an embodiment of this application further provides an attribute decoding apparatus 900, including:

a parsing module 901, configured to parse an obtained encoded bitstream to obtain a to-be-decoded point and a plurality of already-decoded points;

a first determining module 902, configured to determine K first target neighboring points in a plurality of candidate neighboring points based on a geometric distance and an attribute distance between the to-be-decoded point and each candidate neighboring point in the plurality of candidate neighboring points; where the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

a prediction module 903, configured to perform attribute prediction on the to-be-decoded point based on an attribute value of each first target neighboring point to obtain an attribute predicted value of the to-be-decoded point; and

a second determining module 904, configured to determine an attribute reconstruction value of the to-be-decoded point based on the attribute predicted value of the to-be-decoded point and an attribute residual of the to-be-decoded point; where the attribute residual of the to-be-decoded point is obtained by parsing the encoded bitstream.

Optionally, the first determining module 902 is specifically configured to:

calculate a geometric distance between the to-be-decoded point and each candidate neighboring point, and determine an attribute distance between the to-be-decoded point and each candidate neighboring point based on the attribute information of the to-be-decoded point and the attribute information of each candidate neighboring point;

determine a target distance between the to-be-decoded point and each candidate neighboring point based on a geometric distance and an attribute distance between the to-be-decoded point and each candidate neighboring point;

determine K candidate neighboring points with a smallest corresponding target distance in the plurality of candidate neighboring points as K first neighboring points; and

update the K first neighboring points based on a directional distribution relationship between the to-be-decoded point and each first neighboring point to obtain the K first target neighboring points.

Optionally, the first determining module 902 is further specifically configured to:

for any one first candidate neighboring point in the plurality of candidate neighboring points, calculate an attribute absolute difference value between an attribute value of the to-be-decoded point and an attribute value of the first candidate neighboring point; where the attribute value of the to-be-decoded point is determined based on the attribute information of the to-be-decoded point, the attribute value of the first candidate neighboring point is determined based on attribute information of the first candidate neighboring point, and the attribute information of the to-be-decoded point and the attribute information of the first candidate neighboring point are of a same attribute type; and

determine a product between a weight value corresponding to the first candidate neighboring point and the attribute absolute difference value as an attribute distance between the to-be-decoded point and the first candidate neighboring point.

Optionally, the first determining module 902 is further specifically configured to:

for any one second candidate neighboring point in the plurality of candidate neighboring points, determine a sum of a first product corresponding to the second candidate neighboring point and a second product corresponding to the second candidate neighboring point as a target distance between the to-be-decoded point and the second candidate neighboring point; where

the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

Optionally, the first determining module 902 is further specifically configured to:

in a case that a directional distribution relationship between the to-be-decoded point and any two first neighboring points is not opposite in direction, update part of first neighboring points with a largest target distance from the to-be-decoded point in the K first neighboring points to second target neighboring points in N second neighboring points; where
the N second neighboring points are part of neighboring points other than the K first neighboring points in the plurality of candidate neighboring points, the second target neighboring point is a second neighboring point meeting a preset condition and having a smallest corresponding target distance in the N second neighboring points, and N is a positive integer greater than or equal to 1; and
the preset condition includes:

a target distance between the second neighboring point and the to-be-decoded point is less than or equal to a preset distance; and
a direction between the second neighboring point and the to-be-decoded point is opposite to a direction between any one first neighboring point and the to-be-decoded point, and the any one first neighboring point is a first neighboring point in the K first neighboring points other than a first neighboring point with a largest target distance from the to-be-decoded point.

Optionally, the attribute decoding apparatus 900 further includes:
a third determining module, configured to: in a case that attribute information of the plurality of already-decoded points corresponds to different attribute types and the decoding identifier is used to indicate performing attribute decoding on the to-be-decoded point based on an attribute type, determine the geometric distance and the attribute distance between the to-be-decoded point and each candidate neighboring point.

Compared with the related art where nearest neighboring points are determined only based on geometric information of already-decoded points, in this embodiment, the nearest neighboring points are determined based on the geometric distance and attribute distance between the to-be-decoded point and each candidate neighboring point, so that the spatial distance between the nearest neighboring points and the to-be-decoded point is relatively small and the attribute values do not differ greatly. Then attribute decoding is performed on the to-be-decoded point based on the attribute values of the nearest neighboring points, so as to complete decoding of a bitstream with less information redundancy.

The attribute decoding apparatus provided in this embodiment of this application can implement the processes implemented in the method embodiment in FIG. 7, with the same technical effects achieved. To avoid repetition, details are not described herein again.

The attribute encoding apparatus and the attribute decoding apparatus in the embodiments of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal listed above, and other devices may be a server, a network attached storage (Network Attached Storage, NAS), and the like. This is not specifically limited in the embodiments of this application.

The attribute encoding apparatus provided in this embodiment of this application can implement the processes implemented in the method embodiment in FIG. 5, with the same technical effects achieved. To avoid repetition, details are not described herein again.

The attribute decoding apparatus provided in this embodiment of this application can implement the processes implemented in the method embodiment in FIG. 7, with the same technical effects achieved. To avoid repetition, details are not described herein again.

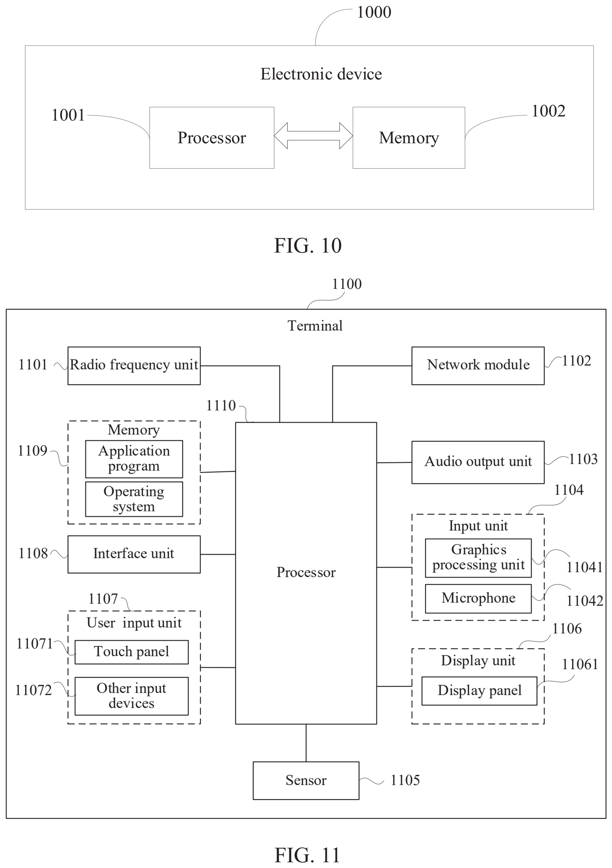

Optionally, as shown in FIG. 10, an embodiment of this application further provides an electronic device 1000, including a processor 1001 and a memory 1002, and the memory 1002 stores a program or instructions capable of running on the processor 1001. For example, when the electronic device 1000 is a terminal, the program or instructions are executed by the processor 1001 to implement the steps of the foregoing attribute encoding method embodiments, or to implement the steps of the foregoing attribute decoding method embodiments, with the same technical effects achieved.

An embodiment of this application further provides a terminal, which includes a processor and a communication interface, where the communication interface is coupled to the processor, and the processor is configured to run a program or instructions to implement the steps of the method embodiments shown in FIG. 5, or to implement the steps of the method embodiments shown in FIG. 7. The terminal embodiment corresponds to the foregoing terminal side method embodiment, and the implementation processes and implementations of the foregoing method embodiments can be applied to the terminal embodiments, with the same technical effects achieved. Specifically, FIG. 11 is a schematic diagram of a hardware structure of a terminal implementing an embodiment of this application.

The terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) for supplying power to the components. The power supply may be logically connected to the processor 1110 through a power management system. In this way, functions such as charge management, discharge management, and power consumption management are implemented by using the power management system. The terminal structure shown in FIG. 11 does not constitute a limitation to the terminal. The terminal may include more or fewer components than those shown in the figure, or some components may be combined, or there may be a different component arrangement, which is not repeated herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061. The display panel 11061 may be configured in a form of a liquid crystal display, an organic light-emitting diode display, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 1101 sends the downlink data to the processor 1111 for processing; and the radio frequency unit 1101 also sends uplink data to the network-side device. Generally, the radio frequency unit 1101 includes, but is not limited to, an antenna, an amplifier, a transceiver, a coupler, a low noise amplifier, a duplexer, and the like.

The memory 1109 may be configured to store software programs or instructions and various data. The memory 1109 may mainly include a first storage area for storing programs or instructions and a second storage area for storing data, where the first storage area may store an operating system, an application program or instructions required by at least one function (for example, an audio playing function and an image playing function), and the like. Further, the memory 1109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static RAM (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 described in the embodiments of this application is intended to include but is not limited to these and any other suitable types of memories.

The processor 1110 may include one or more processing units. Optionally, the processor 1110 may integrate an application processor and a modem processor. The application processor primarily processes operations involving an operating system, user interface, application program, or the like. The modem processor primarily processes radio communication signals, for example, being a baseband processor. It should be understood that alternatively, the modem processor may not be integrated into the processor 1110.

The processor 1110 is configured to perform the following operations:

determining K first target neighboring points in a plurality of candidate neighboring points based on a geometric distance and an attribute distance between a to-be-encoded point and each candidate neighboring point in the plurality of candidate neighboring points; where the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;

performing attribute prediction on the to-be-encoded point based on an attribute value of each first target neighboring point to obtain an attribute predicted value of the to-be-encoded point; and

encoding an attribute residual of the to-be-encoded point to generate an encoded bitstream corresponding to the to-be-encoded point; where the attribute residual of the to-be-encoded point is determined based on the attribute predicted value of the to-be-encoded point and an original attribute value of the to-be-encoded point.

Alternatively, the processor 1110 is further configured to perform the following operations:

parsing an obtained encoded bitstream to obtain a to-be-decoded point and a plurality of already-decoded points;

determining K first target neighboring points in a plurality of candidate neighboring points based on a geometric distance and an attribute distance between the to-be-decoded point and each candidate neighboring point in the plurality of candidate neighboring points; where the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

performing attribute prediction on the to-be-decoded point based on an attribute value of each first target neighboring point to obtain an attribute predicted value of the to-be-decoded point; and

determining an attribute reconstruction value of the to-be-decoded point based on the attribute predicted value of the to-be-decoded point and an attribute residual of the to-be-decoded point; where the attribute residual of the to-be-decoded point is obtained by parsing the encoded bitstream.

An embodiment of this application further provides a readable storage medium, where the readable storage medium stores a program or instructions, and when the program or instructions are executed by a processor, the processes of the foregoing embodiments of the attribute encoding method or the processes of the foregoing embodiments of the attribute decoding method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface. The communication interface is coupled to the processor, and the processor is configured to run a program or instructions to implement the processes of the foregoing embodiments of the attribute encoding method or the processes of the foregoing embodiments of the attribute decoding method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the attribute encoding method or the processes of the foregoing embodiments of the attribute decoding method, with the same technical effects achieved. To avoid repetition, details are not repeated herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform, or certainly, may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

**Claims**

1. An attribute encoding method, comprising:

   determining, by an encoding end, K first target neighboring points in a plurality of candidate neighboring points based on a geometric distance and an attribute distance between a to-be-encoded point and each candidate neighboring point in the plurality of candidate neighboring points; wherein the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;
   performing, by the encoding end, attribute prediction on the to-be-encoded point based on an attribute value of each first target neighboring point to obtain an attribute predicted value of the to-be-encoded point; and
   encoding, by the encoding end, an attribute residual of the to-be-encoded point to generate an encoded bitstream corresponding to the to-be-encoded point; wherein the attribute residual of the to-be-encoded point is determined based on the attribute predicted value of the to-be-encoded point and an original attribute value of the to-be-encoded point.

2. The method according to claim 1, wherein the determining K first target neighboring points in a plurality of candidate neighboring points based on a geometric distance and an attribute distance between a to-be-encoded point and each candidate neighboring point in the plurality of candidate neighboring points comprises:

   calculating, by the encoding end, a geometric distance between the to-be-encoded point and each candidate neighboring point, and determining an attribute distance between the to-be-encoded point and each candidate neighboring point based on the attribute information of the to-be-encoded point and the attribute information of each candidate neighboring point;
   determining, by the encoding end, a target distance between the to-be-encoded point and each candidate neighboring point based on a geometric distance and an attribute distance between the to-be-encoded point and each candidate neighboring point;
   determining, by the encoding end, K candidate neighboring points with a smallest corresponding target distance in the plurality of candidate neighboring points as K first neighboring points; and
   updating, by the encoding end, the K first neighboring points based on a directional distribution relationship between the to-be-encoded point and each first neighboring point to obtain the K first target neighboring points.

3. The method according to claim 2, wherein the determining an attribute distance between the to-be-encoded point and each candidate neighboring point based on the attribute information of the to-be-encoded point and the attribute information of each candidate neighboring point comprises:

   for any one first candidate neighboring point in the plurality of candidate neighboring points, calculating, by the encoding end, an attribute absolute difference value between an attribute value of the to-be-encoded point and an attribute value of the first candidate neighboring point; wherein the attribute value of the to-be-encoded point is determined based on the attribute information of the to-be-encoded point, the attribute value of the first candidate neighboring point is determined based on attribute information of the first candidate neighboring point, and the attribute information of the to-be-encoded point and the attribute information of the first candidate neighboring point are of a same attribute type; and
   determining, by the encoding end, a product between a weight value corresponding to the first candidate neighboring point and the attribute absolute difference value as an attribute distance between the to-be-encoded point and the first candidate neighboring point.

4. The method according to claim 2, wherein the determining a target distance between the to-be-encoded point and each candidate neighboring point based on a geometric distance and an attribute distance between the to-be-encoded point and each candidate neighboring point comprises:

   for any one second candidate neighboring point in the plurality of candidate neighboring points, determining, by the encoding end, a sum of a first product corresponding to the second candidate neighboring point and a second product corresponding to the second candidate neighboring point as a target distance between the to-be-encoded point and the second candidate neighboring point; wherein
   the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

5. The method according to claim 2, wherein the updating the K first neighboring points based on a directional distribution relationship between the to-be-encoded point and each first neighboring point comprises:

in a case that a directional distribution relationship between the to-be-encoded point and any two first neighboring points is not opposite in direction, updating, by the encoding end, part of first neighboring points with a largest target distance from the to-be-encoded point in the K first neighboring points to second target neighboring points in N second neighboring points; wherein

the N second neighboring points are part of neighboring points other than the K first neighboring points in the plurality of candidate neighboring points, the second target neighboring point is a second neighboring point meeting a preset condition in the N second neighboring points, and N is a positive integer greater than or equal to 1; and

the preset condition comprises:

a target distance between the second neighboring point and the to-be-encoded point is less than or equal to a preset distance; and

a direction between the second neighboring point and the to-be-encoded point is opposite to a direction between any one first neighboring point and the to-be-encoded point, and the any one first neighboring point is a first neighboring point in the K first neighboring points other than a first neighboring point with a largest target distance from the to-be-encoded point.

6. The method according to any one of claims 1 to 5, wherein before the determining K first target neighboring points in a plurality of candidate neighboring points based on a geometric distance and an attribute distance between a to-be-encoded point and each candidate neighboring point in the plurality of candidate neighboring points, the method further comprises:

obtaining, by the encoding end, point cloud data; wherein the point cloud data comprises a to-be-encoded point, a plurality of already-encoded points, and an encoding identifier; and

in a case that attribute information of the plurality of already-encoded points corresponds to different attribute types and the encoding identifier is used to indicate performing attribute encoding on the to-be-encoded point based on an attribute type, determining, by the encoding end, the geometric distance and the attribute distance between the to-be-encoded point and each candidate neighboring point.

7. An attribute decoding method, comprising:

parsing, by a decoding end, an obtained encoded bitstream to obtain a to-be-decoded point and a plurality of already-decoded points;

determining, by the decoding end, K first target neighboring points in a plurality of candidate neighboring points based on a geometric distance and an attribute distance between the to-be-decoded point and each candidate neighboring point in the plurality of candidate neighboring points; wherein the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

performing, by the decoding end, attribute prediction on the to-be-decoded point based on an attribute value of each first target neighboring point to obtain an attribute predicted value of the to-be-decoded point; and

determining, by the decoding end, an attribute reconstruction value of the to-be-decoded point based on the attribute predicted value of the to-be-decoded point and an attribute residual of the to-be-decoded point; wherein the attribute residual of the to-be-decoded point is obtained by parsing the encoded bitstream.

8. The method according to claim 7, wherein the determining K first target neighboring points in a plurality of candidate neighboring points based on a geometric distance and an attribute distance between the to-be-decoded point and each candidate neighboring point in the plurality of candidate neighboring points comprises:

calculating, by the decoding end, a geometric distance between the to-be-decoded point and each candidate neighboring point, and determining an attribute distance between the to-be-decoded point and each candidate neighboring point based on the attribute information of the to-be-decoded point and the attribute information of each candidate neighboring point;

determining, by the decoding end, a target distance between the to-be-decoded point and each candidate neighboring point based on a geometric distance and an attribute distance between the to-be-decoded point and each candidate neighboring point;

determining, by the decoding end, K candidate neighboring points with a smallest corresponding target distance in the plurality of candidate neighboring points as K first neighboring points; and

updating, by the decoding end, the K first neighboring points based on a directional distribution relationship between the to-be-decoded point and each first neighboring point to obtain the K first target neighboring points.

9. The method according to claim 8, wherein the determining an attribute distance between the to-be-decoded point and each candidate neighboring point based on the attribute information of the to-be-decoded point and the attribute information of each candidate neighboring point comprises:

for any one first candidate neighboring point in the plurality of candidate neighboring points, calculating, by the decoding end, an attribute absolute difference value between an attribute value of the to-be-decoded point and an attribute value of the first candidate neighboring point; wherein the attribute value of the to-be-decoded point is determined based on the attribute information of the to-be-decoded point, the attribute value of the first candidate neighboring point is determined based on attribute information of the first candidate neighboring point, and the attribute information of the to-be-decoded point and the attribute information of the first candidate neighboring point are of a same attribute type; and

determining, by the decoding end, a product between a weight value corresponding to the first candidate neighboring point and the attribute value as an attribute distance between the to-be-decoded point and the first candidate neighboring point.

10. The method according to claim 8, wherein the determining a target distance between the to-be-decoded point and each candidate neighboring point based on a geometric distance and an attribute distance between the to-be-decoded point and each candidate neighboring point comprises:

for any one second candidate neighboring point in the plurality of candidate neighboring points, determining, by the decoding end, a sum of a first product corresponding to the second candidate neighboring point and a second product corresponding to the second candidate neighboring point as a target distance between the to-be-decoded point and the second candidate neighboring point; wherein

the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

11. The method according to claim 8, wherein the updating the K first neighboring points based on a directional distribution relationship between the to-be-decoded point and each first neighboring point comprises:

in a case that a directional distribution relationship between the to-be-decoded point and any two first neighboring points is not opposite in direction, updating, by the decoding end, part of first neighboring points with a largest target distance from the to-be-decoded point in the K first neighboring points to second target neighboring points in N second neighboring points; wherein

the N second neighboring points are part of neighboring points other than the K first neighboring points in the plurality of candidate neighboring points, the second target neighboring point is a second neighboring point meeting a preset condition and having a smallest corresponding target distance in the N second neighboring points, and N is a positive integer greater than or equal to 1; and

the preset condition comprises:

a target distance between the second neighboring point and the to-be-decoded point is less than or equal to a preset distance; and

a direction between the second neighboring point and the to-be-decoded point is opposite to a direction between any one first neighboring point and the to-be-decoded point, and the any one first neighboring point is a first neighboring point in the K first neighboring points other than a first neighboring point with a largest target distance from the to-be-decoded point.

12. The method according to any one of claims 7 to 11, wherein the encoded bitstream comprises a decoding identifier, and before the determining K first target neighboring points in a plurality of candidate neighboring points based on a geometric distance and an attribute distance between the to-be-decoded point and each candidate neighboring point in the plurality of candidate neighboring points, the method further comprises:

in a case that attribute information of the plurality of already-decoded points corresponds to different attribute types and the decoding identifier is used to indicate performing attribute decoding on the to-be-decoded point based on an attribute type, determining, by the decoding end, the geometric distance and the attribute distance between the to-be-decoded point and each candidate neighboring point.

13. An attribute encoding apparatus, comprising:

a first determining module, configured to determine K first target neighboring points in a plurality of candidate neighboring points based on a geometric distance and an attribute distance between a to-be-encoded point and each candidate neighboring point in the plurality of candidate neighboring points; wherein the candidate neighboring points are at least part of already-encoded points in a plurality of already-encoded points, the attribute distance is determined based on attribute information of the to-be-encoded point and attribute information of the candidate neighboring point, and K is a positive integer greater than or equal to 1;

a prediction module, configured to perform attribute prediction on the to-be-encoded point based on an attribute value of each first target neighboring point to obtain an attribute predicted value of the to-be-encoded point; and

a generating module, configured to encode an attribute residual of the to-be-encoded point to generate an encoded bitstream corresponding to the to-be-encoded point; wherein the attribute residual of the to-be-encoded point is determined based on the attribute predicted value of the to-be-encoded point and an original attribute value of the to-be-encoded point.

14. The apparatus according to claim 13, wherein the first determining module is specifically configured to:

calculate a geometric distance between the to-be-encoded point and each candidate neighboring point, and determine an attribute distance between the to-be-encoded point and each candidate neighboring point based on the attribute information of the to-be-encoded point and the attribute information of each candidate neighboring point;

determine a target distance between the to-be-encoded point and each candidate neighboring point based on a geometric distance and an attribute distance between the to-be-encoded point and each candidate neighboring point;

determine K candidate neighboring points with a smallest corresponding target distance in the plurality of candidate neighboring points as K first neighboring points; and

update the K first neighboring points based on a directional distribution relationship between the to-be-encoded point and each first neighboring point to obtain the K first target neighboring points.

15. The apparatus according to claim 14, wherein the first determining module is further specifically configured to:

for any one first candidate neighboring point in the plurality of candidate neighboring points, calculate an attribute absolute difference value between an attribute value of the to-be-encoded point and an attribute value of the first candidate neighboring point; wherein the attribute value of the to-be-encoded point is determined based on the attribute information of the to-be-encoded point, the attribute value of the first candidate neighboring point is determined based on attribute information of the first candidate neighboring point, and the attribute information of the to-be-encoded point and the attribute information of the first candidate neighboring point are of a same attribute type; and

determine a product between a weight value corresponding to the first candidate neighboring point and the attribute absolute difference value as an attribute distance between the to-be-encoded point and the first candidate neighboring point.

16. The apparatus according to claim 14, wherein the first determining module is further specifically configured to:

for any one second candidate neighboring point in the plurality of candidate neighboring points, determine a sum of a first product corresponding to the second candidate neighboring point and a second product corresponding to the second candidate neighboring point as a target distance between the to-be-encoded point and the second candidate neighboring point; wherein

the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

17. The apparatus according to claim 14, wherein the first determining module is further specifically configured to:

in a case that a directional distribution relationship between the to-be-encoded point and any two first neighboring points is not opposite in direction, update part of first neighboring points with a largest target distance from the to-be-encoded point in the K first neighboring points to second target neighboring points in N second neighboring points; wherein

the N second neighboring points are part of neighboring points other than the K first neighboring points in the plurality of candidate neighboring points, the second target neighboring point is a second neighboring point meeting a preset condition in the N second neighboring points, and N is a positive integer greater than or equal to 1; and

the preset condition comprises:

a target distance between the second neighboring point and the to-be-encoded point is less than or equal to a preset distance; and

a direction between the second neighboring point and the to-be-encoded point is opposite to a direction between any one first neighboring point and the to-be-encoded point, and the any one first neighboring point is a first neighboring point in the K first neighboring points other than a first neighboring point with a largest target distance from the to-be-encoded point.

18. The apparatus according to any one of claims 13 to 17, wherein the apparatus further comprises:

an obtaining module, configured to obtain point cloud data; wherein the point cloud data comprises a to-be-encoded point, a plurality of already-encoded points, and an encoding identifier; and

a second determining module, configured to: in a case that attribute information of the plurality of already-encoded points corresponds to different attribute types and the encoding identifier is used to indicate performing attribute encoding on the to-be-encoded point based on an attribute type, determine the geometric distance and the attribute distance between the to-be-encoded point and each candidate neighboring point.

19. An attribute decoding apparatus, comprising:

a parsing module, configured to parse an obtained encoded bitstream to obtain a to-be-decoded point and a plurality of already-decoded points;

a first determining module, configured to determine K first target neighboring points in a plurality of candidate neighboring points based on a geometric distance and an attribute distance between the to-be-decoded point and each candidate neighboring point in the plurality of candidate neighboring points; wherein the candidate neighboring points are at least part of already-decoded points in a plurality of already-decoded points, the attribute distance is determined based on attribute information of the to-be-decoded point and attribute information of the candidate neighboring point, and K is a positive integer greater than or equal to 1;

a prediction module, configured to perform attribute prediction on the to-be-decoded point based on an attribute value of each first target neighboring point to obtain an attribute predicted value of the to-be-decoded point; and

a second determining module, configured to determine an attribute reconstruction value of the to-be-decoded point based on the attribute predicted value of the to-be-decoded point and an attribute residual of the to-be-decoded point; wherein the attribute residual of the to-be-decoded point is obtained by parsing the encoded bitstream.

20. The apparatus according to claim 19, wherein the first determining module is specifically configured to:

calculate a geometric distance between the to-be-decoded point and each candidate neighboring point, and determine an attribute distance between the to-be-decoded point and each candidate neighboring point based on the attribute information of the to-be-decoded point and the attribute information of each candidate neighboring point;

determine a target distance between the to-be-decoded point and each candidate neighboring point based on a geometric distance and an attribute distance between the to-be-decoded point and each candidate neighboring point;

determine K candidate neighboring points with a smallest corresponding target distance in the plurality of candidate neighboring points as K first neighboring points; and
update the K first neighboring points based on a directional distribution relationship between the to-be-decoded point and each first neighboring point to obtain the K first target neighboring points.

21. The apparatus according to claim 20, wherein the first determining module is further specifically configured to:

for any one first candidate neighboring point in the plurality of candidate neighboring points, calculate an attribute absolute difference value between an attribute value of the to-be-decoded point and an attribute value of the first candidate neighboring point; wherein the attribute value of the to-be-decoded point is determined based on the attribute information of the to-be-decoded point, the attribute value of the first candidate neighboring point is determined based on attribute information of the first candidate neighboring point, and the attribute information of the to-be-decoded point and the attribute information of the first candidate neighboring point are of a same attribute type; and
determine a product between a weight value corresponding to the first candidate neighboring point and the attribute absolute difference value as an attribute distance between the to-be-decoded point and the first candidate neighboring point.

22. The apparatus according to claim 20, wherein the first determining module is further specifically configured to:

for any one second candidate neighboring point in the plurality of candidate neighboring points, determine a sum of a first product corresponding to the second candidate neighboring point and a second product corresponding to the second candidate neighboring point as a target distance between the to-be-decoded point and the second candidate neighboring point; wherein
the first product is a product of a geometric distance weight value corresponding to the second candidate neighboring point and a geometric distance corresponding to the second candidate neighboring point, and the second product is a product of an attribute distance weight value corresponding to the second candidate neighboring point and an attribute distance corresponding to the second candidate neighboring point.

23. The apparatus according to claim 20, wherein the first determining module is further specifically configured to:

in a case that a directional distribution relationship between the to-be-decoded point and any two first neighboring points is not opposite in direction, update part of first neighboring points with a largest target distance from the to-be-decoded point in the K first neighboring points to second target neighboring points in N second neighboring points; wherein
the N second neighboring points are part of neighboring points other than the K first neighboring points in the plurality of candidate neighboring points, the second target neighboring point is a second neighboring point meeting a preset condition and having a smallest corresponding target distance in the N second neighboring points, and N is a positive integer greater than or equal to 1; and
the preset condition comprises:

a target distance between the second neighboring point and the to-be-decoded point is less than or equal to a preset distance; and
a direction between the second neighboring point and the to-be-decoded point is opposite to a direction between any one first neighboring point and the to-be-decoded point, and the any one first neighboring point is a first neighboring point in the K first neighboring points other than a first neighboring point with a largest target distance from the to-be-decoded point.

24. The apparatus according to any one of claims 19 to 23, wherein the encoded bitstream comprises a decoding identifier, and the apparatus further comprises:
a third determining module, configured to: in a case that attribute information of the plurality of already-decoded points corresponds to different attribute types and the decoding identifier is used to indicate performing attribute decoding on the to-be-decoded point based on an attribute type, determine the geometric distance and the attribute distance between the to-be-decoded point and each candidate neighboring point.

25. An electronic device, comprising a processor and a memory, wherein the memory stores a program or instructions capable of running on the processor, and when the program or the instructions are executed by the processor, the steps of attribute encoding according to any one of claims 1 to 6 or the steps of attribute decoding according to any one of claims 7 to 12 are implemented.

26. A readable storage medium, wherein the readable storage medium stores a program or instructions, and when the program or instructions are executed by a processor, the steps of attribute encoding according to any one of claims 1 to 6 or the steps of attribute decoding according to any one of claims 7 to 12 are implemented.

FIG. 1

FIG. 2

| Neighboring point | N0 | N1 | N2 | N3 | N4 | N5 | N6 | N7 |
|---|---|---|---|---|---|---|---|---|
| Distance | 3 | 4 | 3 | 4 | 1 | 2 | 2 | 3 |

List1

| P0 | P1 | P2 |
|---|---|---|
| N0 | N2 | N1 |
| 3 | 3 | 4 |

| P0 | P1 | P2 |
|---|---|---|
| N4 | N0 | N2 |
| 1 | 3 | 3 |

| P0 | P1 | P2 |
|---|---|---|
| N4 | N5 | N0 |
| 1 | 2 | 3 |

| P0 | P1 | P2 |
|---|---|---|
| N4 | N5 | N6 |
| 1 | 2 | 2 |

| P0 | P1 | P2 |
|---|---|---|
| N4 | N5 | N6 |
| 1 | 2 | 2 |

List2

| P3 |
|---|
| N3 |
| 4 |

| P3 | P4 |
|---|---|
| N3 | N1 |
| 4 | 4 |

| P3 | P4 | P5 |
|---|---|---|
| N3 | N1 | N2 |
| 4 | 4 | 3 |

| P3 | P4 | P5 |
|---|---|---|
| N0 | N1 | N2 |
| 3 | 4 | 3 |

| P3 | P4 | P5 |
|---|---|---|
| N0 | N2 | N1 |
| 3 | 3 | 4 |

FIG. 3

FIG. 4

An encoding end determines K first target neighboring points in a plurality of candidate neighboring points based on a geometric distance and an attribute distance between a to-be-encoded point and each candidate neighboring point in the plurality of candidate neighboring points — S501

The encoding end performs attribute prediction on the to-be-encoded point based on an attribute value of each first target neighboring point to obtain an attribute predicted value of the to-be-encoded point — S502

The encoding end encodes an attribute residual of the to-be-encoded point to generate an encoded bitstream corresponding to the to-be-encoded point — S503

FIG. 5

FIG. 6

A decoding end parses an obtained encoded bitstream to obtain a to-be-decoded point and a plurality of already-decoded points — S701

The decoding end determines K first target neighboring points in a plurality of candidate neighboring points based on a geometric distance and an attribute distance between the to-be-decoded point and each candidate neighboring point in the plurality of candidate neighboring points — S702

The decoding end performs attribute prediction on the to-be-decoded point based on an attribute value of each first target neighboring point to obtain an attribute predicted value of the to-be-decoded point — S703

The decoding end determines an attribute reconstruction value of the to-be-decoded point based on the attribute predicted value of the to-be-decoded point and an attribute residual of the to-be-decoded point — S704

FIG. 7

800

Attribute encoding
apparatus

First determining
module — 801

Prediction module — 802

Generating module — 803

FIG. 8

900

Attribute decoding
apparatus

Parsing module — 901

First determining
module — 902

Prediction module — 903

Second determining
module — 904

FIG. 9

1000

Electronic device

1001 Processor ⟷ Memory 1002

FIG. 10

1100

Terminal

1101 Radio frequency unit

Network module 1102

1110

Memory

1109 Application program

Operating system

1108 Interface unit

1107 User input unit

11071 Touch panel

11072 Other input devices

Processor

Audio output unit 1103

1104

Input unit

Graphics processing unit 11041

Microphone 11042

1106

Display unit

Display panel 11061

Sensor 1105

FIG. 11

## INTERNATIONAL SEARCH REPORT

| International application No. |
| --- |
| **PCT/CN2024/103835** |

| A. | CLASSIFICATION OF SUBJECT MATTER |
| --- | --- |

H04N19/124(2014.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; VEN; USTXT; CJFD; CNKI: 点云, 属性, 预测, 编码, 几何, 距离, 最近, 邻近, 邻居, 差, 权重, 权值, 加权, 方向, 方位, point, cloud, attribute, predict, coding, geometric, distance, nearest, neighbor, difference, weight, direction, azimuth

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115720272 A (XIDIAN UNIVERSITY et al.) 28 February 2023 (2023-02-28) description, paragraphs [0060]-[0146] | 1, 6-7, 12-13, 18-19, 24-26 |
| X | CN 115086658 A (TENCENT TECHNOLOGY (SHENZHEN) CO., LTD.) 20 September 2022 (2022-09-20) description, paragraphs [0090]-[0188] | 1, 7, 13, 19, 25-26 |
| X | CN 111405281 A (PEKING UNIVERSITY SHENZHEN GRADUATE SCHOOL) 10 July 2020 (2020-07-10) description, paragraphs [0049]-[0094] | 1, 7, 13, 19, 25-26 |
| Y | CN 115720272 A (XIDIAN UNIVERSITY et al.) 28 February 2023 (2023-02-28) description, paragraphs [0060]-[0146] | 2-4, 8-10, 14-16, 20-22 |
| Y | CN 115412715 A (HONOR DEVICE CO., LTD.) 29 November 2022 (2022-11-29) description, paragraphs [0064]-[0119] | 2-4, 8-10, 14-16, 20-22 |
| A | CN 113784125 A (BEIJING EASY INTELLIGENT TECHNOLOGY CO., LTD.) 10 December 2021 (2021-12-10) entire document | 1-26 |

☑ Further documents are listed in the continuation of Box C.   ☑ See patent family annex.

| * | Special categories of cited documents: | | |
| --- | --- | --- | --- |
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 September 2024** | **20 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/103835** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115988221 A (PEKING UNIVERSITY SHENZHEN GRADUATE SCHOOL) 18 April 2023 (2023-04-18)<br>entire document | 1-26 |
| A | US 2020111236 A1 (APPLE INC.) 09 April 2020 (2020-04-09)<br>entire document | 1-26 |
| A | US 2021104090 A1 (LG ELECTRONICS INC.) 08 April 2021 (2021-04-08)<br>entire document | 1-26 |

Form PCT/ISA/210 (second sheet) (July 2022)

**INTERNATIONAL SEARCH REPORT**
Information on patent family members

International application No.

**PCT/CN2024/103835**

| Patent document cited in search report | | | Publication date (day/month/year) | Patent family member(s) | | | Publication date (day/month/year) |
|---|---|---|---|---|---|---|---|
| CN | 115720272 | A | 28 February 2023 | WO | 2023025174 | A1 | 02 March 2023 |
| CN | 115086658 | A | 20 September 2022 | HK | 40073907 | A0 | 30 December 2022 |
| | | | | HK | 40073907 | A1 | 22 September 2023 |
| | | | | CN | 115086658 | B | 25 July 2023 |
| CN | 111405281 | A | 10 July 2020 | | None | | |
| CN | 115412715 | A | 29 November 2022 | WO | 2022247705 | A1 | 01 December 2022 |
| | | | | EP | 4240018 | A1 | 06 September 2023 |
| | | | | US | 2024037796 | A1 | 01 February 2024 |
| | | | | CN | 115412715 | B | 26 March 2024 |
| | | | | EP | 4240018 | A4 | 27 March 2024 |
| CN | 113784125 | A | 10 December 2021 | | None | | |
| CN | 115988221 | A | 18 April 2023 | | None | | |
| US | 2020111236 | A1 | 09 April 2020 | US | 10853973 | B2 | 01 December 2020 |
| US | 2021104090 | A1 | 08 April 2021 | US | 11158107 | B2 | 26 October 2021 |
| | | | | EP | 4011088 | A1 | 15 June 2022 |
| | | | | EP | 4011088 | A4 | 23 November 2022 |
| | | | | EP | 4011088 | B1 | 03 July 2024 |
| | | | | WO | 2021066626 | A1 | 08 April 2021 |
| | | | | KR | 20210040273 | A | 13 April 2021 |
| | | | | KR | 102358759 | B1 | 07 February 2022 |
| | | | | JP | 7328447 | B2 | 16 August 2023 |
| | | | | CN | 114503571 | A | 13 May 2022 |
| | | | | CN | 114503571 | B | 14 June 2024 |
| | | | | JP | 2022550880 | W | 05 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310853890X